Europäisches Patentamt

European Patent Office

Office européen des brevets

(11) Publication number: **0 150 293**
**B1**

# EUROPEAN PATENT SPECIFICATION

(45) Date of publication of patent specification: **17.08.88**

(51) Int. Cl.⁴: **G 11 B 7/24, C 08 F 8/28**

(21) Application number: **84113776.3**

(22) Date of filing: **14.11.84**

(54) **Substrate for optical recording media.**

(30) Priority: **15.11.83 JP 215754/83**
**21.02.84 JP 31786/84**

(43) Date of publication of application:
**07.08.85 Bulletin 85/32**

(45) Publication of the grant of the patent:
**17.08.88 Bulletin 88/33**

(84) Designated Contracting States:
**DE FR GB IT NL**

(56) References cited:
**FR-A-2 466 830**
**GB-A-1 382 547**
**US-A-3 926 918**

**PATENT ABSTRACTS OF JAPAN, vol. 4, no. 2,**
**9th January 1980, page 102 C 69 (C69; &**
**JP-A-54-138091 (SEKISUI K.K.) 26-10-1979**

**PATENT ABSTRACTS OF JAPAN, vol. 5, no.**
**152, 25 th September 1981, (C-73)(824); &**
**JP-A-56-82806 (SEKISUI K.K.) 06-07-1981**

**PHILIPS TECHNICAL REVIEW, vol. 40, no. 10,**
**1982, Eindhoven, NL; H.C.H. VAN RIJSEWIJK**
**et al. "Manufacture of Laser vision video discs**
**by a photopolymerization process", pages**
**287-297**

(73) Proprietor: **SEKISUI KAGAKU KOGYO**
**KABUSHIKI KAISHA**
**4-4 Nishitenma 2-chome Kita-ku**
**Osaka shi Osaka (JP)**

(72) Inventor: **Nomura, Shigeru**
**70, Kurumazuka 2-chome**
**Itami-shi Hyogo-ken (JP)**
Inventor: **Kinoshita, Takeo**
**2-2, Hyakuyama Shimamoto-cho**
**Mishima-gun Osaka-fu (JP)**
Inventor: **Kadoya, Tetsuo**
**Tokyo Sekisui Ryo, 9 Minamimoto-machi**
**Shinjuku-ku, Tokyo (JP)**

(74) Representative: **Bühling, Gerhard, Dipl.-Chem.**
**et al**
**Patentanwaltsbüro Tiedtke-Bühling-Kinne**
**Grupe-Pellmann-Grams-Struif Bavariaring 4**
**D-8000 München 2 (DE)**

**0 150 293**

## Description

This invention relates to a substrate for use in optical recording media in which recording and reproduction of information are carried out by the reflection or transmission of laser beams. More specifically, the invention relates to a substrate for optical recording media, which has excellent transparency, moisture resistance, moldability and heat resistance and being free from birefringence.

The optical recording media typically comprise a flat substrate and formed on at least one surface thereof, rows of minute depressions, or helically or concentrically extending pre-grooves and a recording layer on the pre-grooves. Laser beams are focused on the minute depressions or the recording layer. The reflected or transmitted light is read and the information is reproduced.

Such optical recording media have been used as video discs, audio discs, document disc files, computer information disc files, etc. Generally, a poly(methyl methacrylate)-type resin or a polycarbonate-type resin is used as a substrate for the optical recording media because of its requirement for transparency.

The poly(methyl methacrylate) resin has excellent moldability and strength, but inferior moisture resistance. At high temperatures and humidities, therefore, molded articles from it undergo warping, or develop cracks while they repeatedly absorb moisture and dry. Moreover, their impact strength is reduced. Japanese Laid-Open Patent Publications Nos. 5354/1983 and 13652/1983 disclose resins having improved moisture resistance obtained by copolymerizing several kinds of monomers such as methacrylates, styrene and cyclohexane methacrylate. However, so long as their major component is polymethacrylate, they have still unsatisfactory moisture resistance.

The polycarbonate-type resin, on the other hand, has low surface hardness and is susceptible to injury. In addition, it has poor moldability, and because the orientation during molding remains in the molded articles, the articles have great birefringence, and therefore cannot be used for large storage capacity image-type discs, large storage capacity document discs, and large storage capacity computer discs.

Other resins having excellent transparency have a high birefringence, and are unsuitable for use in such discs.

FR—A—2 466 830 discloses a coating layer on the glass substrate of an optical recording element, which coating layer is composed of polyvinylacetal. The polyvinylacetal bonds a metallic recording layer to the glass substrate.

It is an object of this invention to provide a substrate for optical recording media, which eliminates the foresaid defects of the prior art, and can be used in optical discs of the large storage capacity recording type.

Another object of this invention is to provide a substrate for optical recording media, which has excellent transparency, moldability and moisture resistance and is free from birefringence.

Still another object of this invention is to provide a substrate for optical recording media, which has excellent heat resistance.

According to this invention, there is provided a substrate for optical recording media, said substrate being composed of a polyvinylacetal resin resulting from acetalization of polyvinylalcohol to a degree of at least 60 mole% with at least one acetalizing agent selected from the group consisting of aliphatic aldehydes, alicyclic aldehydes, aromatic aldehydes and heterocyclic aldehydes.

The present invention is based on the inventors' discovery that a resin having excellent moisture resistance can be obtained by increasing the degree of acetalization of a polyvinylacetal resin having high transparency, and that a resin having excellent heat resistance can be obtained by selecting the type of an aldehyde to be used in acetalization.

The polyvinylacetal resin is obtained by acetalizing polyvinylalcohol with an aldehyde in the presence of an acid catalyst. If the degree of acetalization is low, the resulting polyvinylacetal resin has high hygroscopicity because of the remaining hydroxyl groups. The polyvinylacetal resin forming the substrate of this invention has excellent moisture resistance because it has a degree of acetalization of at least 60 mole%, preferably at least 65 mole%. To obtain such a polyvinylacetal resin, the starting polyvinylalcohol preferably has a high purity.

The polyvinylalcohol has a degree of saponification of at least 80 mole%, preferably at least 95 mole%. In other words, it has not more than 20 mole%, preferably not more than 5 mole%, of residual acetyl groups. If the percentage of the residual acetyl groups is high, the transparency of the resulting polyvinylacetal resin is undesirably reduced. The polyvinylalcohol has a degree of polymerization of 100 to 2,500, preferably 300 to 1,500. If its degree of polymerization is below 100, the resulting polyvinylacetal resin has drastically reduced impact strength and cannot withstand practical use. Furthermore, its heat resistance and moisture resistance tend to be degraded. If, on the other hand, its degree of polymerization exceeds 2,500, an injection-molded article prepared from the resulting polyvinylacetal resin undesirably has great birefringence.

Primarily, an aliphatic aldehyde is used as an acetalizing agent for the polyvinylalcohol. To increase the heat resistance of the polyvinylacetal resin further, an alicyclic aldehyde, an aromatic aldehyde or a heterocyclic aldehyde is used as part or the whole of the acetalizing agent.

Examples of the aliphatic aldehydes include formaldehyde, acetaldehyde, propylaldehyde, n-butylaldehyde, isobutylaldehyde, decylaldehyde, and dodecylaldehyde. These aldehydes may be used singly or in combination.

2

Examples of the alicyclic aldehydes include saturated aldehydes such as cyclohexanealdehyde, trimethylcyclohexanealdehyde, dimethylcyclohexanealdehyde, methylcyclohexanealdehyde, cyclopentanealdehyde, methylcyclopentanealdehyde, decahydro-beta-naphthaldehyde and cyclohexaneacetaldehyde; terpene-type aldehydes such as alpha-camphorenealdehyde, phellandral, cyclocitral, trimethyl-tetrahydrobenzaldehyde, alpha-pyrronenealdehyde, myrtenal, dihydromyretenal and camphenilanealdehyde; and unsaturated aldehydes such as 4-methylcyclohexenealdehyde and 3-methylcyclohexenealdehyde.

Examples of the aromatic aldehyde include benzaldehyde, phenylacetaldehyde, phenylpropylaldehyde, tolualdehyde, dimethylbenzaldehyde, cumenealdehyde, and naphthylaldehyde.

Examples of the heterocyclic aldehydes are aldehydes having a furane ring such as furfural and 5-methyl-furfural.

The above alicyclic, aromatic and heterocyclic aldehydes may respectively be used singly or in combination.

When the alicyclic, aromatic or heterocyclic aldehyde is used as the acetalizing agent, it should be added in an amount sufficient to acetalize at least 5 mole% of the polyvinylalcohol. If it is less than 5 mole%, sufficient heat resistance cannot be obtained. The acetalizing agent may be composed only of the alicyclic, aromatic or heterocyclic aldehyde.

The polyvinylacetal resin may be prepared by an ordinary method such as the dissolving method, the homogeneous method or the precipitation method. Or it may be prepared by saponifying polyvinylacetate and subsequently acetalizing the resulting product.

The polyvinylacetal resin so prepared is molded by ordinary methods such as injection molding or compression molding. As required, ordinary additives such as age resistors, antioxidants, heat stabilizers, ultraviolet absorbers and lubricants may be used in the molding process.

Since the substrate in accordance with this invention is composed of the polyvinylacetal resin having such a high degree of acetalization, it has excellent moisture resistance, and therefore does not undergo warpage or strain during storage. Furthermore, because the resin has excellent moldability, fine pits of a stamper and pre-grooves can be reproduced, and the strain or orientation during molding does not remain. For this reason, erroneous recording or reading of information does not occur. The substrate of this invention is applicable to a wide range of optical recording media including large storage capacity image-type discs, large storage document discs, and large storage capacity computer discs.

The use of the alicyclic, aromatic or heterocyclic aldehyde for the acetalization brings about the advantage that the substrate obtained also has excellent heat resistance.

The following examples illustrate the present invention more specifically.

## Example 1

(A) Preparation of polyvinylacetal

One hundred grams of polyvinylalcohol having a degree of saponification of 99.2 mole% and a degree of polymerization of 2,200 was dissolved in 880 g of distilled water, and 57 g of concentrated hydrochloric acid was added. While the mixture was maintained at 14.4°C, 57.3 g of isobutylaldehyde was added dropwise over 15 minutes. Ten minutes after the addition, polyvinylbutyral precipitated. This reaction system was heated and maintained at 40°C for 10 hours. The temperature was then lowered, and it was neutralized with sodium bicarbonate. The resulting polyvinylbutyral was washed with water, and dried at 70°C for 48 hours. The degree of acetalization of this resin was measured.

(B) Molding of the polyvinylacetal resin and evaluation of its properties

The resin obtained as described in section (A) was injection-molded at a cylinder temperature of 195°C and a molding temperature of 60°C. The warpage after water absorption, percentage water absorption, total light transmittance, haze value and birefringence of the resulting injection-molded plate (1.2 mm × 120 mm × 120 mm) were measured by the methods shown below.

The results obtained in Examples 1 to 8 and Comparative Example 1 are summarized in Table 1.

(1) Warpage after water absorption

Aluminum was vapor deposited on one surface of the molded plate, and a protective coating was further applied to shut off intrusion of water from the vapor-deposited layer. This sample was immersed in water at 20°C, and its warpage at the central portion was measured 72 hours later.

(2) Water absorption

The molded plate not subjected to the vapor deposition treatment was immersed in water at 20°C, and the weight of the sample after 72 hours was measured. The percentage of an increase in weight was calculated.

(3) Total light transmitance

Measured in accordance with the method of ASTM D—1003.

(4) Haze value

Measured in accordance with the method of ASTM D—1003.

(5) Presence or absence of birefringence

The molded plate not subjected to the vapor deposition treatment was interposed between two polarizing plates. Visible light was transmitted through it, and the presence or absence of birefringence was examined by observing the interference fringe.

(6) Degree of acetalization

Measured in accordance with JIS K—6728, 5.5.2. The same method was used in Examples 2, 6, 8, 16 and 17 in which the acetalization was effected by using a single aldehyde.

When two or more aldehydes were used as in Examples 3 to 5, 7, 9 to 15 and 18, the aldehydes were treated with hydroxylamine hydrochloride to convert them to the corresponding oximes which were quantitatively determined by gas chromatography in accordance with JIS K—6728, 5.5.2. The operating conditions for gas chromatography were as follows:—

Gas chromatoigraphic device: GC6AM made by Shimazdu Seisaku Sho, K.K. (FID method)
Column: PEG 6000
Colour temperature: 100—180°C, fixed temperature method (temperatures at which two oximes can be separated differ)
Carrier gas: nitrogen
Flame gas: hydrogen/air

Example 2

Example 1 was repeated except that 69.5 g of isobutylaldehyde was used, and the degree of saponification of the polyvinylalcohol was 99.4%.

Example 3

Example 1 was repeated except that the degree of saponification of the polyvinylalcohol was 99.6%, and instead of isobutylaldehyde, 53.1 g of n-butylaldehyde and 6.8 g of formaldehyde were used.

Example 4

Example 1 was repeated except that the degree of saponification of the polyvinylalcohol was 98.8%, and instead of isobutylaldehyde, 33.5 g of n-butylaldehyde and 29.9 g of acetaldehyde were used.

Example 5

Example 1 was repeated except that the degree of saponification of the polyvinylalcohol was 98.8%, and instead of isobutylaldehyde, 34.9 g of acetaldehyde and 35.7 g of 2-ethylhexylaldehyde was used.

Comparative Example 1

Poly(methyl methacrylate) resin (PARAPET F1000, a producct of Kyowa Gas Chemical Co., Ltd.) generally used for an optical disc was molded and evaluated in the same way as in Example 1.

Table 1

| Ex-ample | Polyvinylalcohol | | Aldehyde | Degree of acetali-zation (mole%) | Properties of the molded article | | | | |
|---|---|---|---|---|---|---|---|---|---|
| | D. P. | Amount of residual acetyl groups (mole%) | | | Warpage (mm) | Water absorp-tion (%) | Total light trans-mittance (%) | Haze value | Biref-ringence |
| 1 | 2200 | 0.8 | Isobutylaldehyde | 69.5 | 0.6 | 0.8 | 92.3 | 0.6 | None |
| 2 | 2200 | 0.6 | Isobutylaldehyde | 78.4 | 0.3 | 0.5 | 92.8 | 0.6 | None |
| 3 | 2200 | 0.4 | n-Butylaldehyde | 62.0 | 0.4 | 0.7 | 91.7 | 0.8 | None |
| | | | Formaldehyde | 12.0 | | | | | |
| 4 | 2200 | 1.2 | n-Butylaldehyde | 40.0 | 0.5 | 0.6 | 92.4 | 0.6 | None |
| | | | Acetaldehyde | 42.0 | | | | | |
| 5 | 2200 | 1.2 | Acetaldehyde | 60.0 | 0.6 | 0.5 | 92.4 | 0.6 | None |
| | | | 2-Ethylhexylaldehyde | 21.0 | | | | | |

- to be continued -

Table 1 (continued)

| Ex-ample | Polyvinylalcohol | | | Degree of acetali-zation (mole%) | Properties of the molded article | | | | |
|---|---|---|---|---|---|---|---|---|---|
| | D. P. | Amount of residual acetyl groups (mole%) | | | Warpage (mm) | Water absorp-tion (%) | Total light trans-mittance (%) | Haze value | Biref-ringence |
| 6 | 500 | 0.95 | Isobutylaldehyde | 69.1 | 0.7 | 0.8 | 92.1 | 0.4 | None |
| 7 | 500 | 0.95 | Isobutylaldehyde | 30.2 | 0.5 | 0.6 | 92.2 | 0.7 | None |
| | | | 2-Ethylhexylaldehyde | 31.0 | | | | | |
| 8 | 500 | 0.95 | Trimethylaldehyde | 60.5 | 0.4 | 0.5 | 92.4 | 0.8 | None |
| Comp. Ex. 1 | – | – | – | – | 2.1 | 1.2 | 91.9 | 0.8 | None |

**0 150 293**

### Example 6

Example 1 was repeated except that polyvinylalcohol having a degree of polymerization of 500 and containing 0.95% of residual acetyl groups was used instead of the polyvinylalcohol used in Example 1.

### Example 7

Example 1 was repeated except that the polyvinylalcohol used in Example 6 was used, and 28 g of isobutylaldehyde and 35.8 g of 2-ethylhexylaldehyde were used instead of 57.3 g of isobutylaldehyde.

### Example 8

Example 1 was repeated except that the polyvinylalcohol used in Example 6 was used, and instead of isobutylaldehyde, 61.5 g of trimethylacetaldehyde was used.

### Example 9

(A) Preparation of polyvinylacetal

One hundred grams of polyvinylalcohol having a degree of saponification of 99.2 mole% and a degree of polymerization of 1,500 was dissolved in 880 g of distilled water. Concentrated hydrochloric acid (57 g) was added, and while the mixture was maintained at 14.4°C, 28.8 g of isobutylaldehyde was added dropwise over 15 minutes. Ten minutes after the addition, a precipitate of polyvinylbutyral formed. Cyclohexanealdehyde (63.5 g) was further added, and the reaction mixture was heated and maintained at 40°C for 10 hours. The temperature was then lowered, and the reaction mixture was neutralized with sodium bicarbonate. The resulting polyvinylacetal was washed with water, and dried at 70°C for 48 hours.

(B) Molding of polyvinylacetal and evaluation of its properties

The resin obtained in (A) was injection-molded at a cylinder temperature of 255°C and a die temperature of 75°C. The warpage after water absorption, percent water absorption, total light transmittance, haze value, birefringence and heat distortion temperature of the resulting injection molded plate (1.2 mm × 120 mm × 120 mm in size) were measured.

The results obtained in Examples 9 to 14 and Comparative Examples 2 and 3 are summarized in Table 2. The heat distortion temperature was measured by the method of ASTM D—648 (18.6 kg/cm$^2$), and the other properties were measured in the same way as in Example 1.

### Example 10

(A) Preparation of polyvinylacetal

One hundred grams of polyvinylalcohol having a degree of saponification of 99.2 mole% and a degree of polymerization of 1,500 was dispersed in a mixture of 100 g of distilled water and 700 g of isopropanol. Concentrated hydrochloric acid (57 g) was added. With stirring at 65°C, 28.8 g of isobutylaldehyde and 95.8 g of 2,2,6-trimethylcyclohexanealdehyde were added. The mixture was maintained at 65°C for 15 hours. The reaction mixture was neutralized, and then a large amount of water was added to precipitate the resin. The resulting polyvinylacetal resin was washed with water, and dried at 70°C for 48 hours.

(B) Molding of the polyvinylacetal resin, and the evaluation of its properties were carried out in the same way as in Example 9.

### Example 11

(A) Preparation of polyvinylacetal

Example 1 was repeated except that 86.2 g of phellandrel was added instead of the cyclohexanealdehyde.

(B) Molding of the polyvinylacetal resin and the evaluation of its properties were carried out in the same way as in Example 9.

### Example 12

(A) Preparation of polyvinylacetal

Example 9 was repeated except that the amount of isobutylaldehyde was changed to 61.3 g, and the amount of cyclohexanealdehyde was changed to 12.7 g.

(B) Molding of the polyvinylacetal resin and the evaluation of its properties were carried out in the same way as in Example 9.

### Example 13

(A) Preparation of polyvinylacetal

Example 1 was repeated except that 54.4 g of benzaldehyde was used instead of cyclohexanealdehyde.

(B) Molding of the polyvinylacetal and the evaluation of its properties were carried out in the same way as in Example 9.

### Example 14

(A) Preparation of polyvinylacetal

Example 9 was repeated except that the amount of isobutylaldehyde was changed to 61.3 g, and 21.8 g of furfural was used instead of the cyclohexanealdehyde.

7

(B)  Molding of the polyvinylacetal and the evaluation of its properties were carried out in the same way as in Example 9.

Comparative Example 2

(A)  Preparation of polyvinylacetal

Example 9 was repeated except that the amount of isobutylaldehyde was changed to 57.3 g, and the cyclohexanealdehyde was not used.

(B) Molding of the polyvinylacetal and the evaluation of its properties were carried out in the same way as in Example 9.

Comparative Example 3

Poly(methyl methacrylate) resin (PARAPET F1000, a product of Kyowa Gas Chemical Co., Ltd.) generally used for an optical disc was molded and evaluated in the same way as in Example 9.

Table 2

| Ex-ample | Aldehyde | Degree of acetali-zation (mole%) | Properties of the molded article | | | | | |
| --- | --- | --- | --- | --- | --- | --- | --- | --- |
| | | | Warpage (mm) | Water absorp-tion (%) | Total light trans-mittance (%) | Haze value | Biref-ringence | Heat distortion temperature ($^{\circ}$C) |
| 9 | Isobutylaldehyde | 35 | 0.4 | 0.6 | 92.3 | 0.9 | None | 83 |
| | Cyclohexanealdehyde | 50 | | | | | | |
| 10 | Isobutylaldehyde | 35 | 0.2 | 0.3 | 92.4 | 1.0 | None | 91 |
| | 2,2,6-Trimethyl cyclohexanealdehyde | 50 | | | | | | |
| 11 | Isobutylaldehyde | 35 | 0.2 | 0.3 | 92.6 | 0.8 | None | 84 |
| | Phellandral | 50 | | | | | | |
| 12 | Iaobutylaldehyde | 75 | 0.6 | 0.5 | 92.8 | 0.9 | None | 74 |
| | Cyclohexanealdehyde | 10 | | | | | | |

- to be continued -

0 150 293

Table 2 (continued)

| Example | Aldehyde | Degree of acetalization (mole%) | Properties of the molded article | | | | | |
|---|---|---|---|---|---|---|---|---|
| | | | Warpage (mm) | Water absorption (%) | Total light transmittance (%) | Haze value | Biref-ringence | Heat distortion temperature (°C) |
| 13 | Isobutylaldehyde | 35 | 0.5 | 0.5 | 91.8 | 1.1 | None | 78 |
| | Benzaldehyde | 50 | | | | | | |
| 14 | Isobutylaldehyde | 75 | 0.6 | 0.6 | 92.4 | 0.8 | None | 73 |
| | Furfural | 10 | | | | | | |
| Comp. Ex. 2 | Isobutylaldehyde | – | 0.6 | 0.8 | 92.3 | 0.6 | None | 61 |
| Comp. Ex. 3 | – | – | 2.1 | 1.2 | 91.9 | 0.8 | None | 82 |

### Example 15

(A)   Preparation of polyvinylacetal

Example 9 was repeated except that polyvinylalcohol having a degree of polymerization of 500 and a degree of saponification of 99.2 mole% was used.

(B)   Molding of the polyvinylacetal and evaluation of its properties were carried out in the same way as in Example 9.

The results obtained in Examples 15 to 18 are summarized in Table 3.

### Example 16

(A)   Preparation of polyvinylacetal

Example 9 was repeated except that the same polyvinylalcohol as used in Example 15 was used, and 90 g of cyclohexanealdehyde was used instead of the isobutylaldehyde.

(B)   Molding of the polyvinylacetal and the evaluation of its properties were carried out in the same way as in Example 9.

### Example 17

(A)   Preparation of polyvinylacetal

Example 9 was repeated except that polyvinylalcohol having a degree of polymerization of 800 and a degree of saponification of 99.5 mole% was used, and 101 g of 3-methylcyclohexanealdehyde was used instead of isobutylaldehyde.

(B)   Molding of the polyvinylacetal and the evaluation of its properties were carried out in the same way as in Example 9.

### Example 18

(A)   Preparation of polyvinylacetal

Example 9 was repeated except that 45 g of cyclohexanealdehyde and 51 g of 3-methylcyclohexanealdehyde were used instead of isobutylaldehyde.

(B)   Molding of the polyvinylacetal resin and the evaluation of its properties were carried out in the same way as in Example 9.

11

Table 3

| Ex-ample | Polyvinylalcohol | | Aldehyde | Degree of acetali-zation (mole%) | Properties of the molded article | | | | | |
|---|---|---|---|---|---|---|---|---|---|---|
| | D. P. | Amount of residual acetyl groups (mole%) | | | Warpage (mm) | Water absorp-tion (%) | Total light trans-mittance (%) | Haze value | Biref-ringence | Heat distor-tion tem-perature ($^{\circ}$C) |
| 15 | 500 | 99.2 | Isobutylaldehyde | 34 | 0.7 | 0.6 | 91.1 | 0.6 | None | 81 |
| | | | Cyclohexanealdehyde | 49 | | | | | | |
| 16 | 500 | 99.2 | Cyclohexanealdehyde | 61 | 0.5 | 0.9 | 90.2 | 0.9 | None | 86 |
| 17 | 800 | 99.5 | 3-Methylcyclohexane-aldehyde | 61.5 | 0.5 | 0.8 | 91.2 | 1.0 | None | 82 |
| 18 | 800 | 99.5 | 3-Methylcyclohexane-aldehyde | 30.5 | 0.5 | 0.8 | 91.4 | 1.1 | None | 84 |
| | | | Cyclohexanealdehyde | 31 | | | | | | |

**Claims**

1. A substrate for optical recording media, said substrate being composed of a polyvinylacetal resin resulting from acetalization of polyvinylalcohol to a degree of at least 60 mole% with at least one acetalizing agent selected from the group consisting of aliphatic aldehydes, alicyclic aldehydes, aromatic aldehydes and heterocyclic aldehydes.

2. The substrate of claim 1 wherein the polyvinylalcohol has a degree of polymerization of 100 to 2,500.

3. The substrate of claim 1 wherein the polyvinylalcohol has a degree of saponification of at least 95 mole%.

4. The substrate of claim 1 wherein the acetalizing agent is an aliphatic aldehyde.

5. The substrate of claim 1 wherein the acetalizing agent is at least one compound selected from the group consisting of alicyclic aldehydes, aromatic aldehydes and heterocyclic aldehydes.

6. The substrate of claim 1 wherein at least 5 mole% of the polyvinylalcohol is acetalized with at least one acetalizing agent selected from the group consisting of alicyclic aldehydes, aromatic aldehydes and heterocyclic aldehydes, and the rest is acetalized with an aliphatic aldehyde to such a degree that the total degree of acetalization is at least 60 mole%.

7. The substrate of claim 1, 4 or 6 wherein the aliphatic aldehydes are selected from the group consisting of formaldehyde, acetaldehyde, propylaldehyde, n-butylaldehyde, isobutylaldehyde, decylaldehyde and dodecylaldehyde.

8. The substrate of claim 1, 5 or 6 wherein the alicyclic aldehydes are selected from the group consisting of saturated aldehydes such as cyclohexanealdehyde, trimethylcyclohexanealdehyde, dimethylcyclohexanealdehyde, methylcyclohexanealdehyde, cyclopentanealdehyde, methylcyclopentanealdehyde. decahydro-beta-naphthaldehyde and cyclohexaneacetaldehyde; terpene-type aldehydes such as alpha-camphorenealdehyde, phellandral, cyclocitral, trimethyltetrahydrobenzaldehyde, alpha-pyrronenealdehyde, myrtenal, dihydromyrtenal and camphenilanealdehyde; and unsaturated aldehydes such as 4-methylcyclohexenealdehyde and 3-methylcyclohexenealdehyde.

9. The substrate of claim 1, 5 or 6 wherein the aromatic aldehydes are selected from the group consisting of benzaldehyde, phenylacetaldehyde, phenylpropylaldehyde, tolualdehyde, dimethylbenzaldehyde, cumenealdehyde, and naphthylaldehyde.

10. The substrate of claim 1, 5 or 6 wherein the heterocyclic aldehydes are selected from aldehydes having a furane ring.

**Patentansprüche**

1. Substrat für optische Aufzeichnungsträger, wobei das erwähnte Substrat aus einem Polyvinylacetalharz besteht, das aus der Acetalisierung von Polyvinylalkohol mit mindestens einem Acetalisierungsmittel, das aus der Gruppe ausgewählt ist, die aus aliphatischen Aldehyden, alicyclischen Aldehyden, aromatischen Aldehyden und heterocyclischen Aldehyden besteht, bis zu einem Grade von mindestens 60 Mol% resultiert.

2. Substrat nach Anspruch 1, bei dem der Polyvinylalkohol einen Polymerisationsgrad von 100 bis 2500 hat.

3. Substrat nach Anspruch 1, bei dem der Polyvinylalkohol einen Verseifungsgrad von mindestens 95 Mol% hat.

4. Substrat nach Anspruch 1, bei dem das Acetalisierungsmittel ein aliphatischer Aldehyd ist.

5. Substrat nach Anspruch 1, bei dem das Acetalisierungsmittel mindestens eine Verbindung ist, die aus der Gruppe ausgewählt ist, die aus alicyclischen Aldehyden, aromatischen Aldehyden und heterocyclischen Aldehyden besteht.

6. Substrat nach Anspruch 1, bei dem mindestens 5 Mol% des Polyvinylalkohols mit mindestens einem Acetalisierungsmittel, das aus der Gruppe ausgewählt ist, die aus alicyclischen Aldehyden, aromatischen Aldehyden und heterocyclischen Aldehyden besteht, acetalisiert sind und der Rest mit einem aliphatischen Aldehyd bis zu einem derartigen Grade acetalisiert ist, daß der gesamte Acetalisierungsgrad mindestens 60 Mol% beträgt.

7. Substrat nach Anspruch 1, 4 oder 6, bei dem die aliphatischen Aldehyde aus der Gruppe ausgewählt sind, die aus Formaldehyd, Acetaldehyd, Propylaldehyd, n-Butylaldehyd, Isobutylaldehyd, Decylaldehyd und Dodecylaldehyd besteht.

8. Substrat nach Anspruch 1, 5 oder 6, bei dem die alicyclischen Aldehyde aus der Gruppe ausgewählt sind, die aus gesättigen Aldehyden wie z.B. Cyclohexanaldehyd, Trimethylcyclohexanaldehyd, Dimethylcyclohexanaldehyd, Methylcyclohexanaldehyd, Cyclopentanaldehyd, Methylcyclopentanaldehyd, Decahydro-beta-naphthaldehyd und Cyclohexanacetaldehyd; Aldehyden des Terpentyps wie z.B. alpha-Camphorenaldehyd, Phellandral, Cyclocitral, Trimethyltetrahydrobenzaldehyd, alpha-Pyronenaldehyd, Myrtenal, Dihydromyrtenal und Camphenilanaldehyd und ungesättigten Aldehyden wie z.B. 4-Methylcyclohexenaldehyd und 3-Methylcyclohexenaldehyd besteht.

9. Substrat nach Anspruch 1, 5 oder 6, bei dem die aromatischen Aldehyde aus der Gruppe ausgewählt sind, die aus Benzaldehyd, Phenylacetaldehyd, Phenylpropylaldehyd, Tolualdehyd, Dimethylbenzaldehyd, Cumolaldehyd und Naphthylaldehyd besteht.

10. Substrat nach Anspruch 1, 5 oder 6, bei dem die heterocyclischen Aldehyde aus Aldehyden mit einem Furanring ausgewählt sind.

**Revendications**

1. Substrat pour supports d'enregistrement optique, ce substrat étant composé d'une résine polyvinylacétal résultant de l'acétalisation d'un alcool polyvinylique à un degré d'au moins 60 moles% avec au moins un agent d'acétalisation choisi dans le groupe comprenant des aldéhydes aliphatiques, des aldéhydes alicycliques, des aldéhydes aromatiques et des aldéhydes hétérocycliques.

2. Substrat selon la revendication 1, dans lequel l'alcool polyvinylique a un degré de polymérisation compris entre 100 et 2500.

3. Substrat selon la revendication 1, dans lequel l'alcool polyvinylique à un degré de saponification d'au moins 95 moles%.

4. Substrat selon la revendication 1, dans lequel l'agent d'acétalisation est un aldéhyde aliphatique.

5. Substrat selon la revendication 1, dans lequel l'agent d'acétalisation est au moins un composé choisi dans le groupe constitué par des aldéhydes alicycliques, des aldéhydes aromatiques et des aldéhydes hétérocycliques.

6. Substrat selon la revendication 1, dans lequel au moins 5 moles% de l'alcool polyvinylique sont acétalisés avec au moins un agent d'acétalisation choisi dans le groupe comprenant des aldéhydes alicycliques, des aldéhydes aromatiques, et des aldéhydes hétérocycliques, et le reste est acétalisé avec un aldéhyde aliphatique à un degré tel que le degré total d'acétalisation est au moins 60 moles%.

7. Substrat selon la revendication 1, 4 ou 6, dans lequel les aldéhydes aliphatiques sont choisis dans le groupe comprenant les suivants: formaldéhyde, acétaldéhyde, propylaldéhyde, n-butylaldéhyde, isobutyl-aldéhyde, décylaldéhyde et dodécylaldéhyde.

8. Substrat selon la revendication 1, 5 ou 6, dans lequel les aldéhydes alicycliques sont choisis dans le groupe comprenant des aldéhydes saturés tels que: cyclohexanealdéhyde, triméthylcyclohexanealdéhyde, diméthylcyclohexanealdéhyde, méthylcyclohexanealdéhyde, cyclopentanealdéhyde, méthylcyclopentane-aldéhyde, décahydro-bêta-naphtaldéhyde et cyclohexaneacétaldéhyde, des aldéhydes terpéniques tels que alpha-camphorènaldéhyde, phelandral, cyclocitral, triméthyl-tétrahydrobenzaldéhyde, alpha-pyrronénealdéhyde, myrténal, dihydromyrténal et camphénilane-aldéhyde; et des aldéhydes non saturés tels que 4-méthylcyclohexènealdéhyde et 3-méthylcyclohexènealdéhyde.

9. Substrat selon la revendication 1, 5 ou 6, dans lequel les aldéhydes aromatiques sont choisis dans le groupe comprenant les suivants: benzaldéhyde, phénylacétaldéhyde, phénylpropylaldéhyde, tolu-aldéhyde, diméthylbenzaldéhyde, cumènealdéhyde et naphtylaldéhyde.

10. Substrat selon la revendication 1, 5 ou 6, dans lequel les aldéhydes héterocycliques sont choisis parmi des aldéhydes ayant un noyau furanique.